(19) Europäisches Patentamt

European Patent Office

Office européen des brevets

(11) Veröffentlichungsnummer: **0 258 570 B1**

(12) **EUROPÄISCHE PATENTSCHRIFT**

(45) Veröffentlichungstag der Patentschrift: **30.09.92**

(21) Anmeldenummer: **87109624.4**

(22) Anmeldetag: **03.07.87**

(51) Int. Cl.⁵: **B31B 19/10**

(54) **Vorrichtung zum Verfahren eines Schlittens o. dgl. in einer Richtung mit im wesentlichen gleicher Geschwindigkeit und zu dessen Zurückführen mit ungleichförmiger Geschwindigkeit.**

(30) Priorität: **14.07.86 DE 3623699**
**07.04.87 DE 3711653**

(43) Veröffentlichungstag der Anmeldung:
**09.03.88 Patentblatt 88/10**

(45) Bekanntmachung des Hinweises auf die
Patenterteilung:
**30.09.92 Patentblatt 92/40**

(84) Benannte Vertragsstaaten:
**BE ES FR GB IT SE**

(56) Entgegenhaltungen:
**EP-A- 0 055 096    EP-A- 0 081 734**
**DE-A- 1 147 379    DE-B- 1 303 722**
**DE-C- 931 629      US-A- 1 883 025**
**US-A- 3 053 129    US-A- 3 883 389**

(73) Patentinhaber: **Windmöller & Hölscher**
**Münsterstrasse 50**
**W-4540 Lengerich(DE)**

(72) Erfinder: **Mundus, Friedhelm, Dipl.-Ing.**
**In den Rietbrooken 22**
**W-4540 Lengerich(DE)**
Erfinder: **Voss, Hans-Ludwig, Dipl.-Ing.**
**Weststrasse 12**
**W-4542 Tecklenburg(DE)**

(74) Vertreter: **Gossel, Hans K., Dipl.-Ing. Lorenz-**
**Seidler-Gossel et al**
**Widenmayerstrasse 23**
**W-8000 München 22(DE)**

## Beschreibung

Die Erfindung betrifft eine Vorrichtung zum Verfahren eines Schlittens o. dgl. in einer Richtung mit im wesentlichen gleicher Geschwindigkeit und zu dessen Zurückführen mit ungleichförmiger Geschwindigkeit, vorzugsweise zum intermittierenden Vorzug einer Folienbahn relativ zu einer gestellfesten Schweißeinrichtung oder zum taktweisen geschwindigkeitsgleichen Vorschub einer Schweißeinrichtung relativ zu einer bewegten Folienbahn, mit einem durch einen Antrieb hin- und herverschwenkbaren Hebel, der über eine in dessen Längsrichtung in diesem verlaufende erste Kulissenführung und einen Gleitstein oder eine Rolle dem in einer zu der Schwenkebene des Hebels parallelen Ebene in Führungen verfahrbaren Schlitten die Antriebsbewegung erteilt, wobei die Halterung des Gleitsteins oder das Lager der Rolle auf einer Linie verschieblich geführt sind, die die Basis eines gleichschenkeligen Dreiecks ist, dessen Schenkel durch den in seine Endlagen verschwenkten Hebel definiert sind.

Zwei Vorrichtungen dieser Art sind aus der DE-PS 32 34 227 bekannt. Die sogenannten Kurvengleichlaufgetriebe dieser Vorrichtungen haben sich sehr bewährt, diese weisen allerdings den Nachteil auf, daß sie einen großen Einbauraum benötigen. Dies ist darauf zurückzuführen, daß die den Schlitten antreibenden, hin- und herverschwenkbaren Hebel als zweiarmige Hebel ausgebildet sind, von denen der dem Antrieb dienende Hebelarm mit Kurvenrollen versehen ist, die eine Stegkurve einer rotierenden Kurvenscheibe einfassen, von der die Antriebsbewegung abgeleitet ist.

Aufgabe der Erfindung ist es daher, eine Vorrichtung der eingangs angegebenen Art zu schaffen, die eine gedrungenere und damit platzsparende Bauweise aufweist.

Erfindungsgemäß wird diese Aufgabe durch die kennzeichnenden Merkmale des Anspruchs 1 gelöst.

Aus US-A-1 883 025 ist eine Maschine zum Schneiden einer kontinuierlich zugeführten Bahn in gleichlange Abschnitte bekannt, die einen geradlinig hin- und herverfahrbaren Schlitten aufweist, der durch einen schwenkbar im Maschinengestell gelagerten Hebel angetrieben wird, der mit einem Langloch versehen ist, in den ein Gleitstein eines rotierenden Kurbelzapfens greift. Dieser bekannte Antrieb vermag den Schlitten aber nicht in einer Richtung mit im wesentlichen gleicher Geschwindigkeit und in der Gegenrichtung mit ungleichförmiger Geschwindigkeit anzutreiben.

Die vorstehend beschriebene erste Ausführungsform der erfindungsgemäßen Vorrichtung ermöglicht es, Bearbeitungen an einer durch die Vorrichtung durchlaufenden Bahn, insbesondere Schlauchfolienbahn, vorzunehmen, diese also beispielsweise zur Herstellung von Säcken mit Querschweißnähten oder aber auch mit Ausstanzungen zu versehen. Es besteht aber auch das Bedürfnis, die erfindungsgemäße Vorrichtung für Bahnen, vorzugsweise Schlauchbahnen, zu verwenden, von denen Abschnitte, beispielsweise mit Boden- und/oder Kopfnähten versehene Beutel abgetrennt und einzeln, geschuppt übereinanderliegend oder in Stapelform abgefördert werden.

In weiterer Ausgestaltung ist daher bei einer erfindungsgemäßen Vorrichtung zum intermittierenden Vorzug einer mit konstanter Geschwindigkeit zugeführten Folienbahn relativ zu einer gestellfesten Quertrenn- oder Quertrennschweißeinrichtung vorgesehen, daß in den Endbereichen des Schlittens quer zu dessen Verschieberichtung Walzen oder Rollen gelagert sind, über die ein endloses Band oder ein endloser Riemen läuft, dessen Obertrum schlaufenartig gestellfeste Umlenkwalzen oder -rollen umschlingt und dessen Untertrum in Schlaufenform über Vorzugswalzen für die Folienbahn läuft, und daß die Folienbahn von den Vorzugswalzen über die in Folienzuführungsrichtung hintere Walze des Schlittens und die erste von dem Obertrum des Bandes oder Riemens intermittierend angetriebene gestellfeste Umlenkwalze läuft.

Bei dieser Ausgestaltung sind die in dem Schlitten gelagerten sowie die gestellfesten Walzen oder Rollen durch den diese umschlingenden endlosen Riemen angetrieben bzw. gekuppelt, so daß diese mit den Vorzugswalzen für die einlaufende Folienbahn in Antriebsverbindung stehen, ohne daß alle Walzen und/oder Rollen von der Folienbahn selbst umschlungen sind. Die Folienbahn, die bei dieser Ausführungsform nur über die in Folienzuführungsrichtung hintere Walze des Schlittens und die erste von dem Obertrum des Bandes oder Riemens intermittierend angetriebene gestellfeste Umlenkwalze läuft, kann also hinter dieser Umlenkwalze in beliebiger Form weitergeführt oder abschnittweise abgetrennt und abgelegt werden.

Zweckmäßigerweise ist die erste von dem Obertrum des Bandes oder Riemens intermittierend angetriebene gestellfeste Umlenkwalze eine Walze eines zweiten Vorzugswalzenpaares für die Folienbahn. Hinter dieser Walze bzw. diesem zweiten Vorzugswalzenpaar kann ein Ablagetisch oder ein Ablageförderband vorgesehen sein, wobei zwischen beiden eine Querschweißtrenn- oder Querschneideeinrichtung angeordnet sein kann, die von der Bahn oder Schlauchfolienbahn Abschnitte oder Beutel abtrennt.

Um dem Kurbelantrieb eine Antriebsbewegung zu erteilen, die über eine möglichst lange Strecke oder möglichst lange Zeit einen Gleichlauf der Schweißwerkzeuge mit der Folienbahn oder einen Stillstand der Folienbahn ermöglicht, ist vorgesehen, daß der Kurbelzapfen in einer Halterung befestigt ist, die auf einer radialen Führung der Kurbel längsverschieblich zu dieser geführt ist und daß die Halterung auf ihrer dem Kurbelzapfen gegenüberliegenden Seite mit einem Zapfen versehen ist, der einen Gleitstein oder eine Rolle trägt, die in einer den Kurbelwellenzapfen einfassenden geschlossenen gestellfesten Kurvenführung mit der gewünschten Charakteristik läuft.

Um weiterhin eine einfache Formatumstellung zu ermöglichen, ist in weiterer Ausgestaltung der Erfindung vorgesehen, daß die Führungen des Schlittens parallel zu der Basis des gleichschenkeligen Dreiecks verlaufen und daß der Schlitten mit einer zu diesen Führungen rechtwinkeligen Führung versehen ist, in der der Träger der in der ersten Kulissenführung des Hebels geführten Rolle durch Stellmittel verstellbar geführt ist.

Ausführungsbeispiele der Erfindung werden nachstehend anhand der Zeichnung näher erläutert. In dieser zeigt

Fig. 1 eine Siegelmaschine in Seitenansicht,

Fig. 2 den Schlitten mit Schlittenantrieb der Siegelmaschine nach Fig. 1 in vergrößerter Darstellung,

Fig. 3 einen Schnitt durch das Kurvengleichlaufgetriebe des Schlittenantriebs längs der Linie III - III in Fig. 2,

Fig. 4 einen Schnitt durch das Kurvengleichlaufgetriebe längs der Linie IV - IV in Fig. 3,

Fig. 5 eine schematische Draufsicht auf das Kurvengleichlaufgetriebe zur Verdeutlichung der Formatveränderung,

Fig. 6 eine vergrößerte Darstellung des in Fig. 2 mit strichpunktierter Linie eingekreisten Bereiches,

Fig. 7 ein Weg-Zeit-Diagramm des Kurvengleichlaufgetriebes,

Fig. 8 ein Geschweindigkeitsdiagramm des Kurvengleichlaufgetriebes und

Fig. 9 eine zweite Ausführungsform einer Siegelmaschine zur Herstellung von mit Bodenschweißnähten versehenen Beuteln.

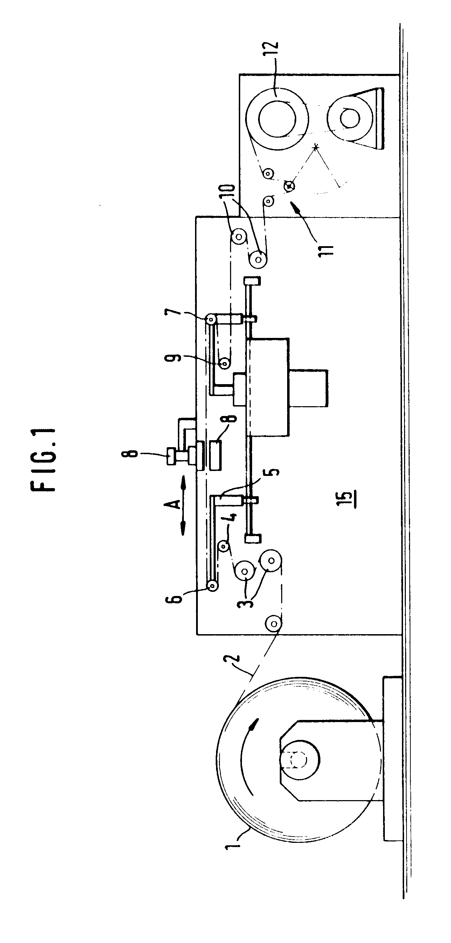

Bei der in Fig. 1 dargestellten Siegelmaschine ist in einem Ständer eine Vorratsrolle 1 gelagert, von der durch die Vorzugswalzen 3 kontinuierlich eine beispielsweise zu Beuteln oder Säcken zu verarbeitende Folienschlauchbahn 2 abgezogen wird. Von den Vorzugswalzen 3 läuft die Folienschlauchbahn 2 über eine gestellfeste Umlenkrolle 4 zu zwei mit Abstand zueinander in einem Schlitten 5 gelagerten Walzen 6 und 7. Zwischen diesen Walzen 6 und 7 ist eine gestellfeste Siegeleinrichtung 8 üblicher Bauart vorgesehen. Die mit Siegelnähten versehene Folienschlauchbahn läuft dann über eine gestellfeste Umlenkrolle 9 und eine Vorzugswalze 10 zu einem aus einer Pendelwalze 11 bestehenden Zwischenspeicher und von diesem zu der Aufwickelvorrichtung 12, durch die die mit Schweißnähten versehene Schlauchfolienbahn zu einer Vorratsrolle aufgewickelt wird.

Der Schlitten 5 ist mit Führungskonsolen 13 versehen, die gestellfeste Führungsstangen 14 umgreifen und auf diesen geführt sind. Die beiden Führungsstangen 14 sind im Bereich ihrer Enden mit dem Maschinengestell 15 fest verbunden, so daß der Schlitten 5 in Pfeilrichtung A auf den Führungsstangen 14 hin- und herverschoben werden kann. Um hierzu dem Schlitten die erforderliche Antriebsbewegung zu erteilen, weist dieser eine Führungsnut 16 auf, in der eine Stellmutter 17 geführt ist, welche über eine mit einem Gewinde versehene Spindelstange in der Nut 16 zum Zwecke der Formatverstellung verschoben werden kann. Mit der Stellmutter 17 ist ein Zapfen 19 fest verbunden, der an seinem der Stellmutter 17 abgewandten Ende eine Führungsrolle 20 trägt. Diese Führungsrolle 20 ist in einer Führungsbahn 21 geführt, die in der aus einem Hebel bestehenden Schwinge 22 vorgesehen ist. Die Schwinge 22 ist um die Achse 23 schwenkbar im Getriebegehäuse 24 gelagert, das mit dem Gestell verbunden ist.

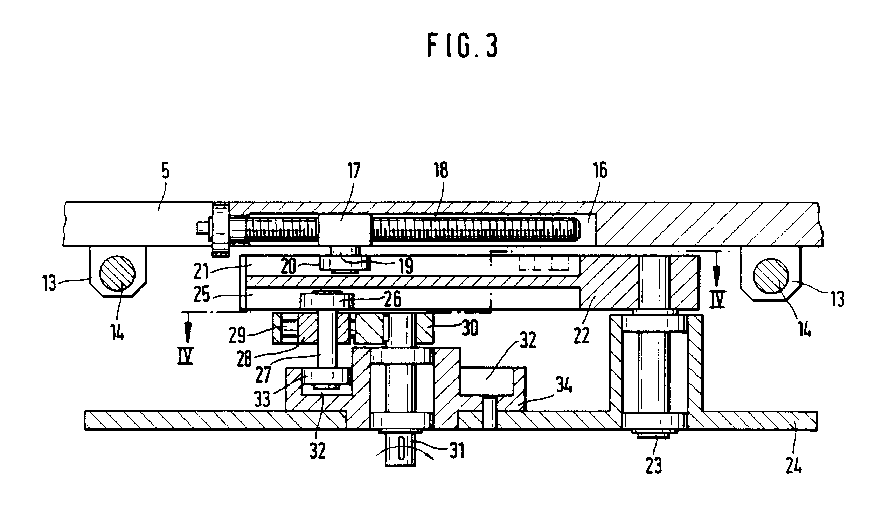

Wie aus Fig. 3 ersichtlich ist, ist die Schwinge 22 neben der Führungsbahn 21 mit einer parallel zu dieser verlaufenden zweiten Führungsbahn 25 versehen. In dieser ist eine Rolle 26 geführt, die auf ein Ende des Kurbelzapfens 27 aufgesetzt ist. Der Kurbelzapfen 27 wird von einem Gleitstein 28 gehalten, der auf Führungsstangen 29 verschiebbar in dem Kurbelarm 30 gelagert ist. Der Kurbelarm 30 ist auf dem Kurbelwellenzapfen 31 befestigt.

Das Maß der Verschiebung des Gleitsteins 28 auf den Führungsstangen 29 bei jeder Umdrehung des Kurbelwellenzapfens 31 wird durch die Ausbildung der Kurvennut 32 bestimmt, in der eine Rolle 33 geführt ist, die auf das der Rolle 26 gegenüberliegende Ende des Kurbelzapfens 27 aufgesetzt ist. Die Kurvennut 32 ist in die Nabe 34 eingearbeitet, die fest mit dem Gehäuse 24 verbunden ist.

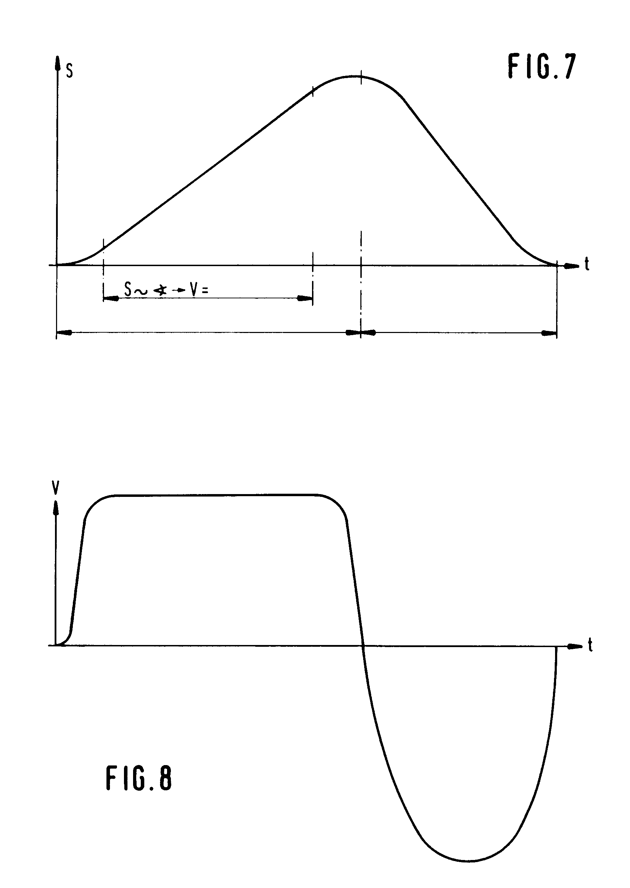

Durch die Ausgestaltung der Führungsnut 32 wird erreicht, daß in der aus den Diagrammen nach den Fig. 7 und 8 ersichtlichen Weise über einen bestimmten Weg eine konstante Geschwindigkeit erreicht wird, so daß die Umlenkwalzen 6, 7 des Schlittens 5 während der Siegelzeit mit einer solchen Geschwindigkeit verschoben werden, daß keine Relativbewegung zwischen der kontinuierlich abgezogenen Schlauch- oder Halbschlauchbahn 2 und der Siegeleinrichtung 8 entsteht.

Der intermittierende Stillstand der Schlauchfolienbahn 2 während der Siegelzeiten wird durch entsprechendes Verfahren des Schlittens 5 erreicht, wobei die Endstellung des Schlittens in Fig.

6 durch die gestrichelt eingezeichneten Walzen 6 dargestellt ist.

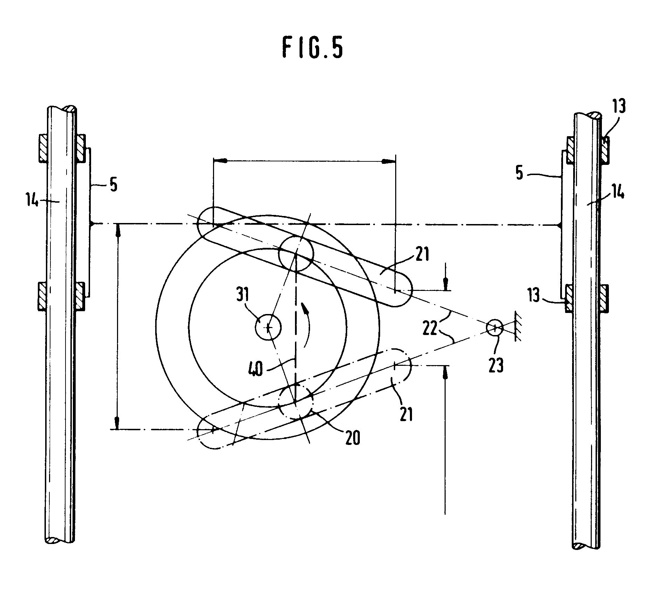

In Fig. 5 ist schematisch der auf den Führungsstangen 14 verschiebliche Schlitten 5 dargestellt. Weiterhin ist die um die Achse 23 verschwenkbaren Schwinge 22 mit strichpunktierten Linien und die auf deren Oberseite vorgesehene Führungsnut 21 angedeutet worden. In der Führungsnut 21 ist die Rolle 20 geführt. Da die Rolle 20 über ihre Halterung 17 in der Nut 16 des Schlittens 15 verstellbar ist, läßt sich durch die Verstellung der Schlittenhub von der dargestellten maximalen Hublänge auf die angedeutete minimale Hublänge verstellen. Da die Rolle 20 in ihrer jeweiligen Einstellung relativ zu dem Schlitten festgehalten ist, ist diese auf zu den Führungen 14 parallelen Linien geführt, von denen eine Linie 40 in Fig. 5 gestrichelt angedeutet ist. Wie aus Fig. 5 ersichtlich ist, ist die Linie 40 die Basis eines gleichschenkeligen Dreiecks, dessen Schenkel durch die jeweils in ihre Endlagen verschwenkte Schwinge 22 definiert sind.

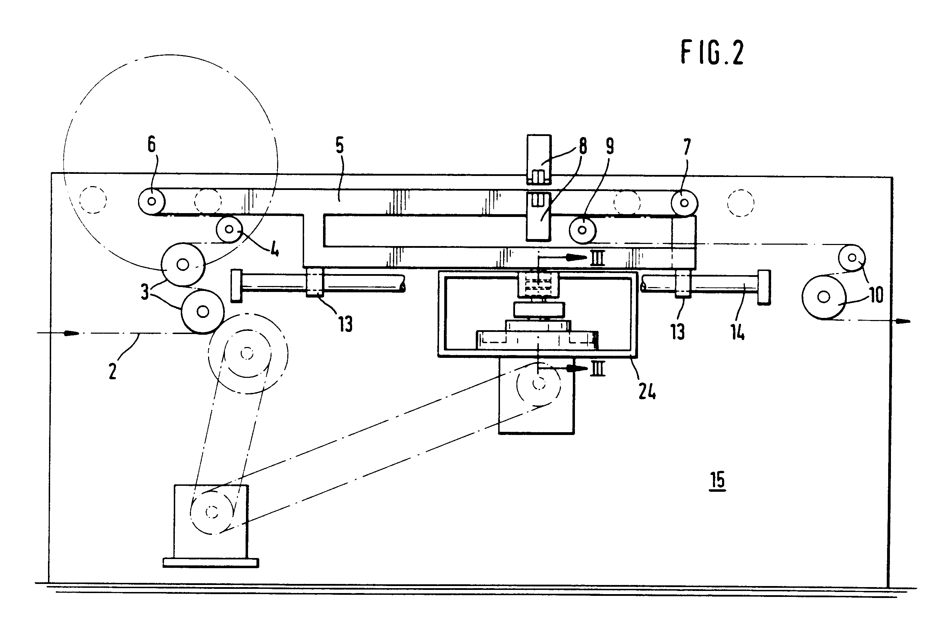

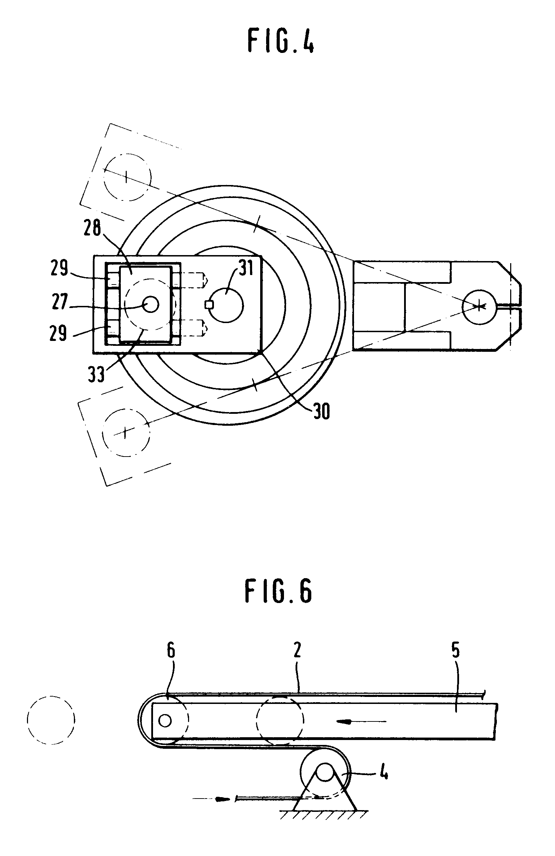

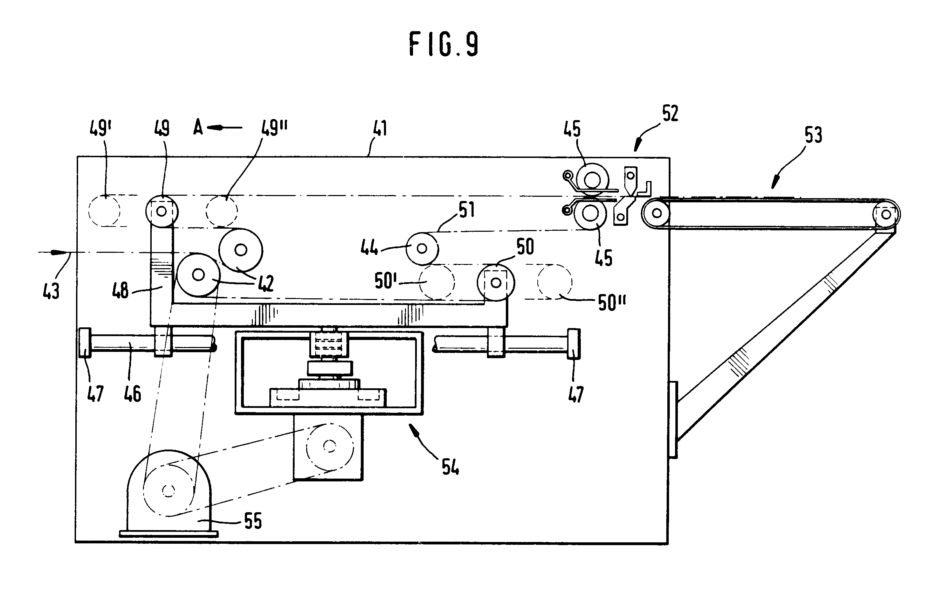

Die Fig. 9 zeigt eine Vorrichtung, bei der von der zugeführten Schlauchfolienbahn 42 mit Bodenschweißnähten versehene Beutel abgeschweißt und auf ein Stapelband abgelegt werden. Die Vorrichtung weist zwei Seitengestelle auf, von denen der besseren Übersichtlichkeit halber nur das hintere Seitengestell 41 dargestellt ist. In diesem ist ein Vorzugswalzenpaar 42 gelagert, über welches die Schlauchbahn 43 kontinuierlich vorgezogen wird. Des weiteren sind in dem Seitengestell 41 eine Umlenkwalze 44 und ein Vorzugswalzenpaar 45 gelagert. Unterhalb des Vorzugswalzenpaares 42 sind zwei parallel zueinander verlaufende Führungsstangen 45 vorgesehen, die über Traversen 47 mit dem nicht dargestellten Seitengestell und mit dem Seitengestell 41 verbunden sind. Auf die Führungsstangen 46 ist gleitend ein Schlitten 48 aufgesetzt, der zwei Umlenkwalzen 49 und 50 trägt. Der Antrib des Schlittens 48 erfolgt in der anhand der Fig. 1 bis 8 beschriebenen Weise. Aus der Zeichnung ist zu erkennen, daß das Vorzugswalzenpaar 42, die Umlenkwalze 49, die untere Umlenkwalze des Walzenpaares 45, die Umlenkwalze 44 und die Umlenkwalze 50 von einem endlosen Band 51 umschlungen sind. Die von dem Vorzugswalzenpaar 42 kontinuierlich vorgezogene Schlauchbahn 43 umschlingt lediglich die Unlenkwalze 49. Sie wird im Anschluß daran von dem Vorzugswalzenpaar 45 diskontinuierlich vorgezogen. Uber eine an sich bekannte, mit 52 bezeichnete Einrichtung werden dann im Takt des Vorzugswalzenpaares 45 einzelne Schlauchabschnitte von der Bahn 43 abgetrennt und beispielsweise mit einer Bodennaht versehen. Die einzelnen abgetrennten Schlauchabschnitte können dann beispielsweise auf ein schuppenbildendes Förderband 53 abgelegt werden.

Zum Zeitpunkt der in Fig. 9 dargestellten Lage des Schlittens 48 wird gerade geschweißt, während sich der Schlitten 48 in Pfeilrichtung A bewegt, und zwar so lange, bis die Umlenkwalze 49 ihre mit gestrichelten Linien dargestellte Lage 49' und die Umlenkwalze 50 ihre mit gestrichelten Linien dargestellte Lage 50' erreicht haben. Durch diese Bewegung des Schlittens 48 wird die kontinuierlich zugeführte Bahn 43 gespeichert. Kurz bevor der Schlitten 48 seine linke Endstellung erreicht hat, werden die Schweißbacken geöffnet, so daß mit der reversierenden Bewegung des Schlittens 48 in seine rechte Endstellung (gekennzeichnet durch die Lage der Umlenkwalze 49'' und 50'') das Vorzugswalzenpaar 45 die zwischengespeicherte Bahnlänge vorzieht, zuzüglich der Bahnlänge, die während der Bewegung des Schlittens 48 entgegen der Pfeilrichtung A durch die Vorzugswalzen 42 vorgezogen wird. Bei Formatänderung wird eine entsprechende Umstellung des Kurvengleichlaufgetriebes 54 und des Motors 55 vorgenommen.

**Patentansprüche**

1. Vorrichtung zum Verfahren eines Schlittens (5) o.dgl. in einer Richtung mit im wesentlichen gleicher Geschwindigkeit und zu dessen Zurückführen mit ungleichförmiger Geschwindigkeit, vorzugsweise zum intermittierenden Vorzug einer mit konstanter Geschwindigkeit zugeführten Folienbahn relativ zu einer gestellfesten Schweißeinrichtung oder zum taktweisen geschwindigkeitsgleichen Vorschub einer Schweißeinrichtung relativ zu einer bewegten Folienbahn,

   mit einem durch einen Antrieb hin- und herverschwenkbaren Hebel (22), der über ein in dessen Längsrichtung in diesem verlaufende erste Kulissenführung (21) und einen ersten Gleitstein oder eine ersten Rolle (20) dem in einer zur Schwenkebene des Hebels parallelen Ebene in Führungen verfahrbaren Schlitten (5) die Antriebsbewegung erteilt,

   wobei die Halterung des ersten Gleitsteins oder das Lager der ersten Rolle auf einer Linie verschieblich geführt sind, die die Basis eines gleichschenkeligen Dreiecks ist, dessen Schenkel durch den in seine Endlagen verschwenkten Hebel (22) definiert sind,

   **dadurch gekennzeichnet,**

   daß der Antrieb des Hebels (22) auf einer in einer zu der Schwenkebene des Hebels (22) parallelen Ebene umlaufenden Kurbel (30) mit angetriebenem Kurbelwellenzapfen (31) besteht, deren Kurbelzapfen (27) einen zweiten Gleitstein oder eine zweite Rolle (26) trägt, die in einer zweiten Kulissenführung (25) des Hebels (22) läuft, die sich auf dessen der ersten Kulissenführung (21) gegenüberliegenden Seite befindet, und daß der Kurbelzapfen (27) in einer Halterung (28) befestigt ist, die auf einer radialen Führung (29) der Kurbel (30) längsverschieblich zu dieser geführt ist und daß die Halterung (28) auf ihrer dem Kurbelzapfen gegenüberliegenden Seite mit einem Zapfen versehen ist, der einen dritten Gleitstein oder eine dritte Rolle (33) trägt, die in einer den Kurbelwellenzapfen (3) einfassenden geschlossenen gestellfesten Kurvenführung (32) mit der gewünschten Charakteristik läuft.

2. Vorrichtung nach Anspruch 1, dadurch gekennzeichnet, daß in den Endbereichen des Schlittens (48) quer zu dessen Verschieberichtung Walzen (49,50) oder Rollen gelagert sind, über die ein endloses Band (51) oder ein endloser Riemen läuft, dessen Obertrum schlaufenartig gestellfeste Umlenkwalzen (45,44) oder -rollen umschlingt und dessen Untertrum in Schlaufenform über Vorzugswalzen (42) für die Folienbahn (43) läuft, und daß die Folienbahn (43) von den Vorzugswalzen (42) über die in Folienzuführungsrichtung hintere Walze (49) des Schlittens (48) und die erste von dem Obertrum des Bandes (51) oder Riemens intermittierend angetriebene gestellfeste Umlenkwalze (45) läuft.

3. Vorrichtung nach Anspruch 1 oder 2, dadurch gekennzeichneet, daß die von dem Obertrum des Bandes (51) oder Riemens intermittierend angetriebene gestellfeste Umlenkwalze (45) eine Walze eines zweiten Vorzugswalzenpaares für die Folienbahn (43) ist.

4. Vorrichtung nach Anspruch 1 oder 2, dadurch gekennzeichnet, daß hinter der ersten von dem Obertrum des Bandes (51) oder Riemens intermittierend angetriebenen gestellfesten Umlenkwalze (45) ein Ablagetisch oder ein Ablageförderband (53) vorgesehen und zwischen beiden eine Querschneid- oder Querschweißtrenneinrichtung (52) angeordnet ist.

5. Vorrichtung nach einem der Ansprüche 1 bis 4, dadurch gekennzeichnet, daß die an der Halterung (28) befestigten Zapfen miteinander fluchten.

6. Vorrichtung nach einem der Ansprüche 1 bis 5, dadurch gekennzeichnet, daß die Führungen (14) des Schlittens (5) parallel zu der Basis (40) des gleichschenkeligen Dreiecks (22,40) verlaufen und daß der Schlitten (5) mit einer zu diesen Führungen (13) rechtwinkeligen Führung (16) versehen ist, in der der Träger (17) der in der ersten Kulissenführung (21) des Hebels (22) geführten Rolle (20) durch Stellmittel (18) verstellbar geführt ist.

## Claims

1. Apparatus for displacing a carriage (5) or the like in one direction at a substantially equal speed and for returning it at a nonuniform speed, preferably for the intermittent drawing of a sheet web fed at a constant speed relative to a welding device mounted on the frame, or for an advance at an equal speed of a welding device in a timed sequence relative to a moved sheet web,
with a lever (22) that can be pivoted to and fro by a drive, which lever imparts to the carriage (5) the drive motion via a first slideway (21) extending in the lever in its longitudinal direction and a first sliding block or a first roller (20), which carriage is displaceable in guideways in a plane parallel to the pivoting plane of the lever,
wherein the mounting of the first sliding block or the bearing of the first roller is carried for displacement on a line forming the base of an isosceles triangle whose sides are defined by the lever (22) when pivoted into its end positions,
**characterized in that**
the drive for the lever (22) consists of a crank (30) rotating in a plane parallel to the pivoting plane of the lever (22) with a driven crankshaft pin (31) whose crankpin (27) carries a second sliding block or a second roller (26) running in a second slideway (25) of the lever (22) located on its opposite side to the first slideway (21), and that the crankpin (27) is mounted in a mounting (28) which is carried on a radial guide (29) of the crank (30) for longitudinal displacement relative to the latter, and that the mounting (28) is provided on its opposite side to the crankpin with a pin carrying a third sliding block or a third roller (33) which moves in a closed cam guide (32) with the desired characteristic, which encloses the crankshaft pin (3) and is mounted on the frame.

2. Apparatus according to claim 1, characterized in that in the end zones of the carriage (48), there are mounted rollers (49, 50) or reels transversely to its direction of displacement, over which there moves an endless band (51) or an endless belt whose upper side winds in a loop mode round guide rollers (45, 44) or guide reels mounted on the frame and whose bottom side runs in a loop form over drawing rollers (42) for the sheet web (43), and that the sheet web (43) passes from the drawing rollers (42) over the roller (49) of the carriage (48) which is the rear one in the web conveyance direction and over the first guide roller (45) intermittently driven by the upper side of the band (51) or reel and which is mounted on the frame.

3. Apparatus according to claim 1 or 2, characterized in that the guide roller intermittently driven by the upper side of the band (51) or belt and mounted on the frame is a roller of a second drawing roller pair for the sheet web (43).

4. Apparatus according to claim 1 or 2, characterized in that behind the first guide roller (45), intermittently driven by the upper side of the band (51) or belt and mounted on the frame, provision is made for a delivery table or a delivery conveyor belt (53) and that between them, there is arranged a transverse cutter device or a transverse weld separating device (52).

5. Apparatus according to one of claims 1 to 4, characterized in that the pins secured on the mounting (28) are interaligned.

6. Apparatus according to one of claims 1 to 5, characterized in that the guideways (14) for the carriage (5) extend parallel to the base (40) of the isosceles triangle (22, 40) and that the carriage (5) is provided at right angles to these guideways (13) with a guideway (16) wherein the support (17) for the roller (20) carried in the first slideway (21) of the lever (22) is carried with scope for adjustment by adjustment means (18).

**Revendications**

1. Dispositif pour déplacer un chariot (5) ou similaire dans une direction avec une vitesse essentiellement constante, et pour son retour avec une vitesse inégale, de préférence pour la traction intermittente d'une bande en feuille amenée à vitesse constante par rapport à un dispositif de soudage solidaire du bâti ou pour l'avance cadencée à la même vitesse d'un dispositif de soudage par rapport à une bande en feuille en déplacement,

comprenant un levier (22) pouvant être pivoté suivant un mouvement alternatif par l'intermédiaire d'un entraînement, levier qui, par l'intermédiaire d'un premier guide de coulisse (21) s'étendant dans celui-ci dans la direction longitudinale de celui-ci et un premier coulisseau ou un premier rouleau (20) communique le mouvement d'entraînement au chariot (5) pouvant être déplacé dans des guidages dans un plan parallèle au plan de pivotement du levier,

le dispositif de fixation ou de maintien du premier coulisseau ou le palier du premier rouleau étant guidé de façon déplaçable sur une ligne qui constitue la base d'un triangle à ailes égales dont les ailes sont définies par le levier (22) pivoté dans ses positions extrêmes, caractérisé

en ce que l'entraînement du levier (22) est constitué par une manivelle (30) tournant dans un plan parallèle au plan de pivotement du levier (22) comprenant un tourillon du vilebrequin entraîné (31) dont le tourillon de manivelle (27) supporte un deuxième coulisseau ou un deuxième rouleau (26) qui se déplace dans un deuxième guide de coulisse (25) du levier (22) qui se trouve sur son côté opposé au premier guide de coulisse (21), et en ce que le tourillon de manivelle (27) est fixé dans un dispositif de fixation (28) qui est guidé sur un guidage radial (29) de la manivelle (30) de façon déplaçable longitudinalement par rapport à celle-ci, et en ce que le dispositif de fixation ou de maintien (28) sur son côté opposé au tourillon de manivelle est pourvu d'un tourillon qui supporte un troisième coulisseau ou un troisième rouleau (33) qui se déplace dans un guidage de courbe (32) solidaire du bâti, fermé, entourant le tourillon du vilebrequin (31), suivant la caractéristique recherchée.

2. Dispositif selon la revendication 1, caractérisé en ce que dans les zones extrêmes du chariot (48), transversalement à sa direction de déplacement sont placés des cylindres (49, 50) ou des rouleaux sur lesquels passe une bande sans fin (51) ou une courroie sans fin dont le brin supérieur entoure à la manière d'une boucle des cylindres ou rouleaux de déviation (45, 44) solidaires du bâti, et dont le brin inférieur passe sous forme de boucle sur des cylindres de traction (42) de la bande en feuille (43), et en ce que la bande en feuille (43) passe des cylindres de traction (42) sur le cylindre (49) arrière dans la direction d'amenée de la feuille du chariot (48) et le premier cylindre de déviation (45) solidaire du bâti, entraîné par intermittence, par le brin supérieur de la bande (51) ou de la courroie.

3. Dispositif selon la revendication 1 ou 2, caractérisé en ce que le cylindre de déviation (45) solidaire du bâti entraîné par intermittence par le brin supérieur de la bande (51) ou de la courroie est un cylindre d'une deuxième paire de cylindres de traction de la bande en feuille (43).

4. Dispositif selon la revendication 1 ou 2, caractérisé en ce qu'il est prévu derrière le premier cylindre de déviation (45) solidaire du bâti entraîné par intermittence par le brin supérieur de la bande (51) ou la courroie une table de réception ou une bande transporteuse de réception (53), et qu'il est prévu, entre les deux, un dispositif de séparation de coupe transversale ou de soudure transversale (52).

5. Dispositif selon l'une des revendications 1 à 4, caractérisé en ce que les tourillons fixés au dispositif de fixation ou de maintien (28) sont alignés les uns avec les autres.

6. Dispositif selon l'une des revendications 1 à 5, caractérisé en ce que les guidages (14) du chariot (5) s'étendent de façon parallèle à la base (40) du triangle à ailes égales (22, 40), et en ce que le chariot (5) est pourvu d'un guidage (16) à angle droit par rapport à ces guidages (13) dans lequel est guidé de façon déplaçable par des moyens de réglage (18) le support (17) du rouleau (20) guidé dans le premier guide de coulisse (21) du levier (22).

# FIG.1

EP 0 258 570 B1

FIG.2

EP 0 258 570 B1

FIG.3

# FIG.4

# FIG.6

# FIG.5

FIG.7

$S \sim \star \rightarrow V =$

FIG.8

# FIG.9

EP 0 258 570 B1